Europäisches Patentamt

European Patent Office

Office européen des brevets

(11) Publication number:

**0 371 649**
**A2**

(12) # EUROPEAN PATENT APPLICATION

(21) Application number: **89311736.6**

(22) Date of filing: **13.11.89**

(51) Int. Cl.⁵: **H04N 9/74**

(30) Priority: **26.11.88 GB 8827671**

(43) Date of publication of application:
**06.06.90 Bulletin 90/23**

(84) Designated Contracting States:
**BE CH DE ES FR IT LI LU NL SE**

(71) Applicant: **GEC-MARCONI LIMITED**
**The Grove Warren Lane**
**Stanmore Middlesex HA7 4LY(GB)**

(72) Inventor: **Robinson, Christopher Paul**
**59 Bishop Crescent**
**Shepton Mailet Somerset(GB)**

(74) Representative: **Cockayne, Gillian et al**
**The General Electric Company plc Patent**
**Department GEC Marconi Research Centre**
**West Hanningfleid Road**
**Great Baddow, Chelmsford Essex CM2**
**8HN(GB)**

(54) **Lateral inverter.**

(57) When a video camera views a scene via a mirror the image is reversed in the mirror and appears laterally inverted in the final image. Apparatus for correcting this inversion includes a line store (9) into which each line is read into and then read out in reverse order. Alternate lines of data are then voltage inverted (15) to restore the correct phase relationships required for systems such as the PAL TV system.

Further techniques are used to stabilise the video with respect to synchronisation signals.

Fig.5.

## LATERAL INVERTER

This invention relates to a Lateral Inverter and in particular it relates to a Lateral Inverter for a television or video picture. It is particularly relevant to systems of the PAL type. One aspect of the PAL system is described in more detail in UK Patent No. GB 1 005 855.

When a video camera views a scene via a mirror, as is typically done in for instance infra-red imaging, then the image is reversed in the mirror and appears back-to-front in the final image, i.e. an E appears as Ǝ It is important in such circumstances to provide a means for reversing each line such that the image is laterally inverted and hence appears correctly to the viewer.

Conventionally, in systems which use the PAL colour television standard, lateral inversion is achieved by de-coding the PAL into Y, U and V signals, where Y represents the luminance of the signal and U and V are signals containing the colour or chroma information, storing the video into line stores, replaying each line backwards and subsequently PAL encoding. Such a system is complex and consumes considerable amounts of power. In addition PAL encoders and decoders are complicated and since the signal is split into three components Y, U and V before lateral inversion then clearly three sets of stores, analogue-to-digital converters and digital-to-analogue converters are required.

According to the present invention there is provided apparatus for laterally inverting a video signal comprising a line store for reading each line of data into, means for reading the data out of said line store in reverse order, means for separating chroma information from luminance information of the data when read out; and, means for voltage inverting alternate lines of chroma data.

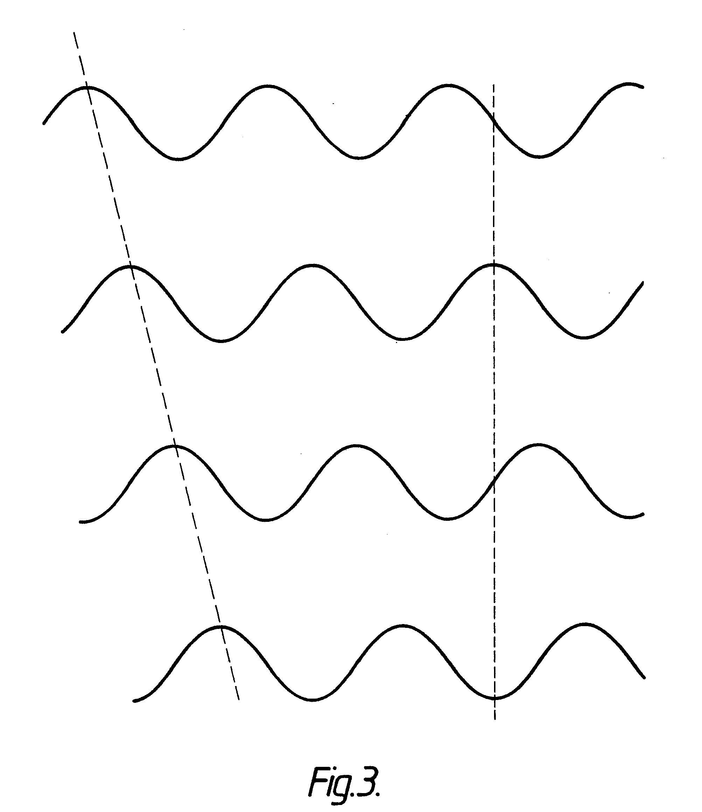

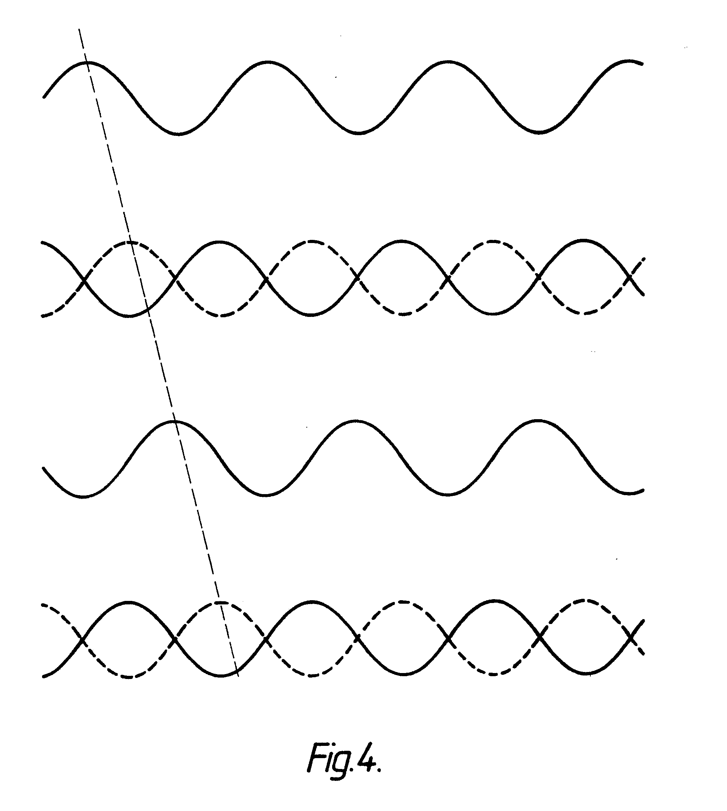

Figures 3 and 4 of the accompanying drawings illustrate the advantage of voltage inverting alternate lines of data. In Figure 3 the colour subcarrier signal for a TV line is shown, which is normally at a frequency of just over 4.43 MHz. Thus, there are approximately 283.75 cycles per line which leads to a shift of almost $-90°$ between the start of each line. Hence, Figure 3 shows each subsequent line offset by $-90°$. Conventional PAL processing uses this shift to calculate the true phase of each line.

Figure 4 shows by means of solid lines the same four lines backwards, i.e. laterally inverted. It is immediately evident that the constant phase relationship between all the lines is not present. All the peaks for instance do not lie in regular diagonal lines of the angle indicated in Figure 3. In Figure 4 the dashed lines show alternate lines which have been voltage inverted. This simple step reintroduces the phase relationship, as seen by the diagonal line.

Preferably, the video data is of the type which transmits not only a synchronisation pulse but also a colour reference burst at the beginning of each line of data, such as is used in PAL, SECAM and NTSC, in which case a reference burst from one received line is used as a reference for the preceding line. This removes the difficulties that would occur from using the reference burst, which was sent before each line, as the reference for that line, since when reading out backwards the burst would appear after the information.

Embodiments of the invention will now be described by way of example only with reference to the accompanying drawings, in which;

Figure 1 shows a schematic wave form representative of a line of a television signal.

Figures 2, 3 and 4 are explanatory diagrams, and;

Figure 5 is a schematic block diagram of a lateral inverting circuit.

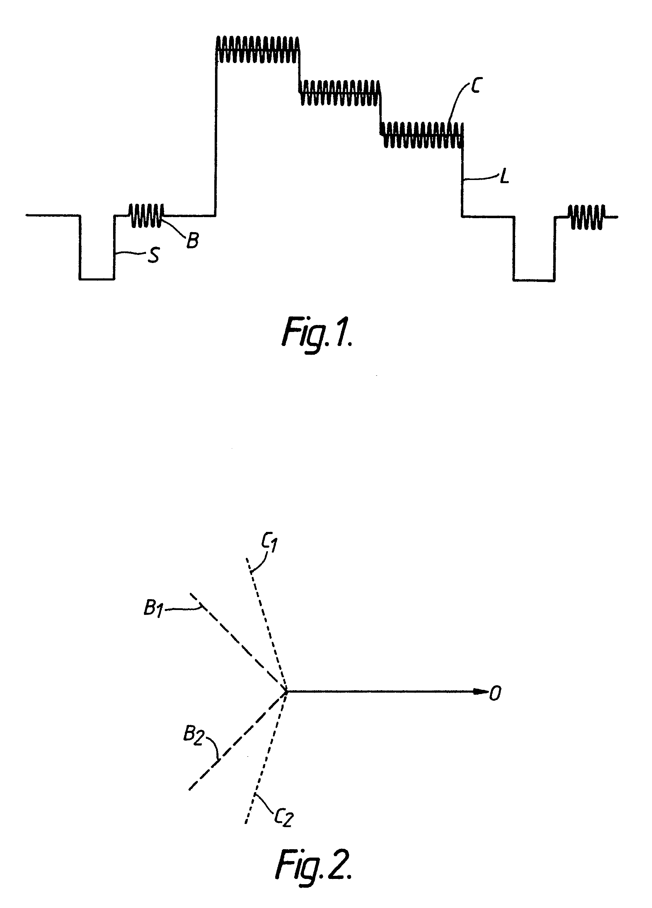

In Figure 1 there is shown the typical waveform of an image in the PAL system, the image in this case being one of three vertical blocks of different colour. Each line of such data comprises firstly a luminance component L and secondly a chrominance component C. The amplitude of the luminance component L determines the intensity of the signal at any point. Super-imposed upon this is the chrominance signal C, the relative phase of which determines the colour of the signal at any point. Prior to each line a synchronisation pulse S is transmitted followed by a short reference burst B which determines the reference phase, from which the phases of the chrominance signal can be compared, in order that the correct colour may be derived for each line. In practice, as shown in Figure 2, the phase of this reference burst alternates between adjacent line between $135°$ and $225°$, where B1 and B2 show the phase of the reference burst during adjacent lines. Thus, a signal of constant colour will produce an output C1 on the phasor diagram of Figure 2 during the first line and C2 during the second line. This system enables errors to be deleted and removed relatively easily.

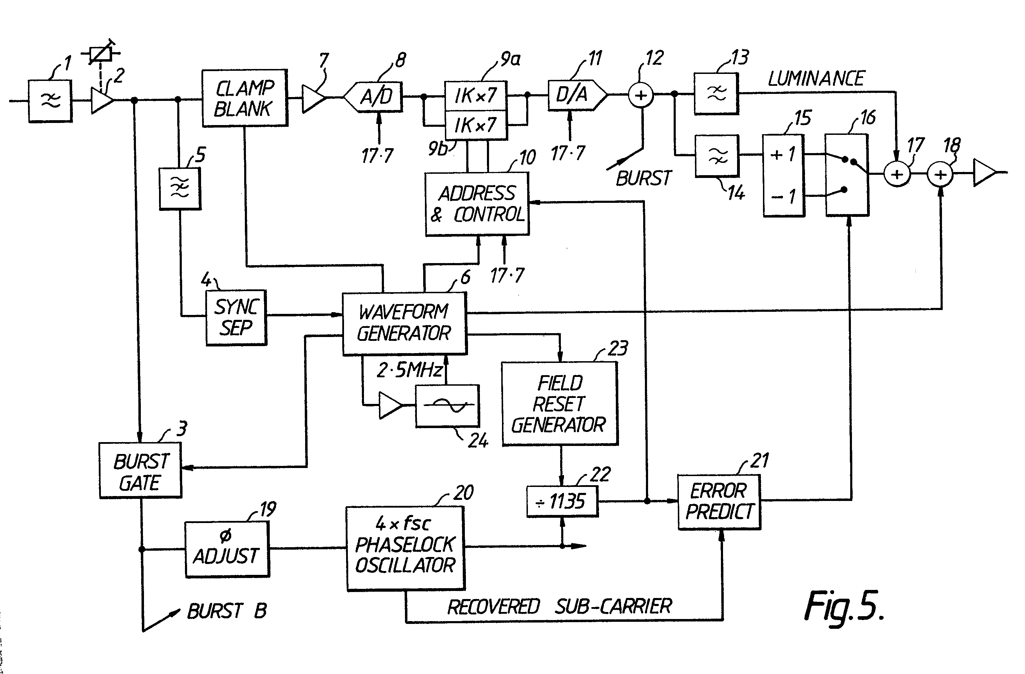

Lateral inversion apparatus embodying the invention is shown in Figure 5. Input video information is passed through a low pass filter 1 and amplifier 2. The colour burst information B is separated out at burst gate 3 as is the synchronisation pulse at a separator 4 via notch filter 5. A waveform generator 6 is used for generating timing signals to actuate the burst gate in order to separate out the burst B. A separate 2.5 MHz clock 24 is shown associated with the generator but in practice the clock may be part of the same semiconductor chip. The remainder of the video signal representative of the data on each line is passed through a driver 7 to an A to D converter 8, which digitises the signal at a sampling frequency of 17.7 MHz. It should be noted that the signal contains both luminance and chrominance information at this stage. The sampling frequency is chosen to be four times the frequency (~4.43 MHz) of the chroma sub-carrier in a PAL system in order to satisfy the sampling theorem and get a true representation of the input signal in digital form.

Alternate lines of data are fed to a respective alternate one of two line stores 9a and 9b. The choice of which particular store the information is stored in is determined by an address and control unit 10 fed by a signal from the wave form generator 6 and clocked by the 17.7 MHz signal. For example, whilst information from one line is being fed sequentially into line store 9a, the information from the preceding line which was stored sequentially in store 9b is read out in reverse order (and hence laterally inverted) and applied to a digital-to-analogue converter 11 which is also sampled at 17.7 MHz.

The resulting signal, now in analogue form, is applied to a mixer where the burst information of the currently received line is added to the information being output from line store 9b. It is thus seen that the burst information for one line is actually used as reference information for the preceding line in each case. After the line information and its reference burst have been recombined at 12 the signal is subsequently split into luminance and chrominance information by a respective low pass filter 13 and high pass filter 14. The chrominance information is passed through a unit 15 which selectively applies a gain of either unity or minus 1 to alternate lines via a switch 16. Hence, every alternate line is voltage inverted and the remaining lines are unchanged. The signal, alternately voltage inverted and non-inverted, is then recombined with the luminance and sync information at 17 and 18 respectively and passed on for further processing.

It is of course necessary to know which lines are to be voltage inverted. This is achieved by comparing the phases of the chroma sub-carrier at the start of each line. Since, as described above, there is not a whole number of cycles of this tone in each line then the start phase is expected to shift with each line by a known amount. Accordingly, the phase information is separated by a phase adjuster 19 which is used to set up a phaselock oscillator (PLO) 20 arranged to generate a sampling frequency of 17.7 MHz.

This recovered sub-carrier is applied to an error prediction unit 21 together with the output from a divider 22 which is arranged to provide a pulse at the beginning of each line. The divider is fed from PLO 20 and is reset by a field reset generator 23, adapted to generate a pulse at the beginning of every field. The reset signal serves to avoid the problem of the picture 'rolling across the screen due to the non-integer number of cycles of the sub-carrier in each field. The output from the PLO is also conveniently used as the sampling frequency for respective A/D and D/A converters B and 11.

Error predictor 21 looks at the phase of the information it receives and decides whether that line should be voltage inverted. For example, a study of Figure 3 shows that at a known point shown by the vertical dotted line, two lines are at a peak or trough. By knowing what is expected the predictor can decide whether that line should be inverted.

The whole system is synchronised by using the incoming TV synchronisation signals to choose a PAL clock edge (i.e. an edge of the 4.43 MHz clock) from which to commence read in and read out. If the PAL clock is not precisely that defined by conventional PAL standards it may not be the same as that of the incoming data. Thus the TV synchronisation is not locked to the PAL clock and read in and read out commences on the nearest available PAL clock edge. As a result of this the laterally inverted picture jumps from side to side. To overcome this problem, in an alternative embodiment, the incoming line synchronisation is stored along with the picture information. The outgoing line sync is derived from the, now inverted, signal; which ensures the inverted picture is stationary with respect to outgoing syncs.

Although the invention has been described with reference to a PAL system its use is not exclusive to this and the techniques of the invention may be used with other types of TV system.

## Claims

1. Apparatus for laterally inverting a video signal comprising a line store (9a, 9b) for reading each line of data into, means (10) for reading the data out of the said line store in reverse order, means (13, 14) for separating chroma information from luminance information of the data when read out, and; means (16) for voltage inverting alternate lines of chroma data.

2. Apparatus as claimed in Claim 1 further including means (12) for using each reference burst of chroma information as a reference for the preceding line of information.

3. Apparatus as claimed in Claim 1 or Claim 2 including two line stores (9a, 9b) arranged so that alternate lines of data can be read into alternate stores whilst the preceding line of data is read out of the other store.

4. Apparatus as claimed in any of the preceding claims wherein the or each line store is adapted to additionally store synchronisation information.

5. Apparatus as claimed in any of the preceding claims including means (19, 20, 22) for measuring the phase of the chrominance sub-carrier of each line and means (21) for predicting, from this phase information, which set of alternate lines in each field are to be voltage inverted.

6. Apparatus as claimed in Claim 5 wherein the predicting means is adapted to operate at the beginning of each line.

Fig.1.

Fig.2.

Fig.3.

Fig.4.

Fig.5.

EP 0 371 649 A2